# EUROPÄISCHE PATENTSCHRIFT

(11) **EP 1 878 480 B1**
(45) Veröffentlichungstag und Bekanntmachung des Hinweises auf die Patenterteilung: **07.09.2011**
(21) Anmeldenummer: 07012797.2
(22) Anmeldetag: 29.06.2007
(51) Int. Cl.: B01D 11/02, C13K 1/02

(54) **Extraktionsreaktor zur Hydrolyse von pflanzlichen Rohstoffen**
Extraction reactor for hydrolysis of vegetable raw material
Réacteur d'extraction destiné à l'hydrolyse de matières premières végétales

(30) Priorität: 10.07.2006 DE 102006032600
(43) Veröffentlichungstag der Anmeldung: 16.01.2008
(73) Patentinhaber: Kose, Frank, 13189 Berlin (DE); Schmidt, Matthias, 01097 Dresden (DE)
(72) Erfinder: Kose, Frank, 13189 Berlin (DE); Schmidt, Matthias, 01097 Dresden (DE)
(74) Vertreter: Gerber, Wolfgang

(56) Entgegenhaltungen:
- WO-A-97/26064
- DE-C- 927 139
- GB-A- 2 065 114
- US-A- 5 419 355

## Beschreibung

Die Erfindung betrifft einen Extraktionsreaktor zur Hydrolyse von pflanzlichen Rohstoffen mit konzentrierten Säuren.

Es ist bekannt, pflanzliche Rohstoffe mit hochkonzentrierter Salzsäure unter Normalbedingungen zu verzuckern (DR-PS 927. 139). Bei dem in Fachkreisen unter der Bezeichnung "Bergius-Hägglund" bekannten Verfahren wird bei der Behandlung der pflanzlichen Rohstoffe mit höchstkonzentrierter Salzsäure, drucklos und unter Normaltemperatur das Makromolekül Cellulose über das Disaccarid Cellobiose bis zur Glucose abgebaut.

Die Hydrolyse des lignocellulosehaltigen Materials wird dabei gewöhnlich in zwei Schritten durchgeführt. Während der sogenannten Vorhydrolyse werden vor allem Hemicellulosen unter Verwendung von milderen Säurekonzentrationen gespalten. Nach Abtrennung der Vorhydrolysezucker wird unter höheren Säurekonzentrationen während der Haupthydrolyse die Cellulose gespalten und' in Form von Glucose in Lösung gebracht.

Es ist hierzu bekannt (DR-PS 927 139), dass die Hydrolyse in Extraktionsbatterien mit mehreren hintereinander geschalteten, aufrecht stehenden Rohrreaktoren durchgeführt wird.

Die aus statischen Gründen gewöhnlich aus dickwandigen Kohlenstoff-Stahl bestehenden Rohrreaktoren werden dabei wegen der hochgradig korrosiven Anwendung von Säuren innen meist mit einer Schutzschicht, bestehend aus säurebeständigen Anstrichen aus Bitumen und Teer, beschichtet.

Nachteil dieser Rohrreaktoren ist es, dass relativ dicke Wandstärken eine größere Beständigkeit gegen Korrosion herbeiführen müssen und damit hohe Kosten für den Materialeinsatz beim Aufbau verursacht werden.

Während des Betriebs der mit Bitumen und Teerschichten innen konservierten Rohrreaktoren müssen diese Schichten laufend, wegen des von der Biomasse verursachten hohen Abriebs, erneuert werden.

Auch bekannt gewordene Beschichtungen mit Teflon zeigten eine geringe Abriebfestigkeit.

Hier will die Erfindung Abhilfe schaffen.

Aufgabe der Erfindung ist es, unter hochgradig korrosiven Bedingungen beim Einsatz von hochkonzentrierten Säuren bei der Hydrolyse von pflanzlichen Rohstoffen die Standzeit der Rohrreaktoren zu verlängern. Die bei der Hydrolyse gelösten Kohlenhydrate, Proteine, Salze und Essigsäure tragen zusätzlich zu einer erhöhten Korrosivität bei. Die verwendeten Materialien müssen dahingehend ausgelegt sein.

Diese Aufgabe wird mit den im Anspruch 1 aufgeführten Merkmalen gelöst, indem ein aus Kunststoff, vorzugsweise aus Polyvinylchlorid (PVC) hart, bestehender, rohrförmig ausgebildeter, stirnseitig mit, Behälterdeckeln sowie damit verbundenen Siebböden versehener Rohrreaktor außen mit einem faserverstärkten Reaktorschutz ummantelt ist.

Als korrosionsbeständige Materialien für das Reaktorrohr unter den Bedingungen der Verwendung hochkonzentrierter Säure, gelöster Kohlenhydrate, Proteine, Satze und Essigsäure und mechanisch die Oberfläche hoch beanspruchender Biomasse wurden Polyvinylchlorid (PVC) hart, nachchloriertes Polyvinylchlorid (PVC-C), Polyethylen(PE), Polypropylen (PP), Polybutylen (PB), Polyvinylidenfluorid (PVDF), Polyvinylfluorid (PVF), Ethylen-Propylen-Dien-Kautschuk (EPDM), Ethylen-Propylen-Copolymer, Ethylen-Tetrafluorethylen (ETFE); Perfluor-Ethylen-Propylen-Kunststoff (FEP), Perchlortrifluorethylen (PCTFE), Perfluorierter Kautschuk (FFPM und FFKM), Butylkautschuk (IIR), Isoprenkautschuk (IR), Chloriertes Polyethylen (PE-C), Gummi (Sammelbezeichnung für Kautschuke mit Schwefel) sowie Copolymere und Mischungen aus diesen Polymeren gefunden, wobei für den faserverstärkten Reaktorschutz zur Verbesserung der Berstsicherheit des Kunststoff-Reaktorrohres ein Gewebe aus Polymeren, wie Polyvinylchlorid (PVC), Polyethylen(PE), Polypropylen (PP), Polybutylen (PB), Polytetrafluorethylen (PTFE), Polyvinylidenfluorid (PVDF), Polyvinylfluorid (PVF), Ethylen-Propylen-Dien-Kautschuk (EPDM), Ethylen-Propylen-Copolymer, Ethylen-Tetrafluorethylen (ETFE), Perfluor-Ethylen-Propylen-Kunststoff (FEP), Fluor-Polymer_Kunststoffe (FPM und FKM = Gruppenbezeichnung), Perfluortrifluorethylen (PCTFE), Perfluorierter Kautschuk (FFPM und FFKM), Butylkautschuk (IIR), Isoprenkautschuk (IR), Chloriertes Polyethylen (PE-C), Gummi (Sammelbezeichnung für Kautschuke mit Schwefel) sowie Copolymere und Mischungen gefunden wurde, welches in eine Matrix eingeschlossen ist, wobei als geeignete Matrizen Beton, Polyvinylchlorid (PVC), Polyethylen(PE), Polypropylen (PP), Polybutylen (PB), Polytetrafluorethylen (PTFE) sowie Copolymere und Mischungen, Lignin in reiner und mit Formaldehyd polymerisiert, gefunden wurden.

Bei Versuchen wurden folgende Vorteile der erfindungsgemäßen Ausbildung des erfindungsgemäßen Extraktionsreaktors festgestellt:

Das Reaktorrohr ist gegen die hochgradig korrosive Salzsäure, gelöster Kohlenhydrate, Proteine, Salze und Essigsäure beständig und gegenüber der zu extrahierenden Biomasse hinreichend abriebsfest.

Die faserverstärkte Ummantelung des Reaktorrohres verleiht diesem eine hinreichende Berstsicherheit bei geringer Masse der Anordnung.

Weiterbildungen der Erfindung sind Gegenstände der Unteransprüche.

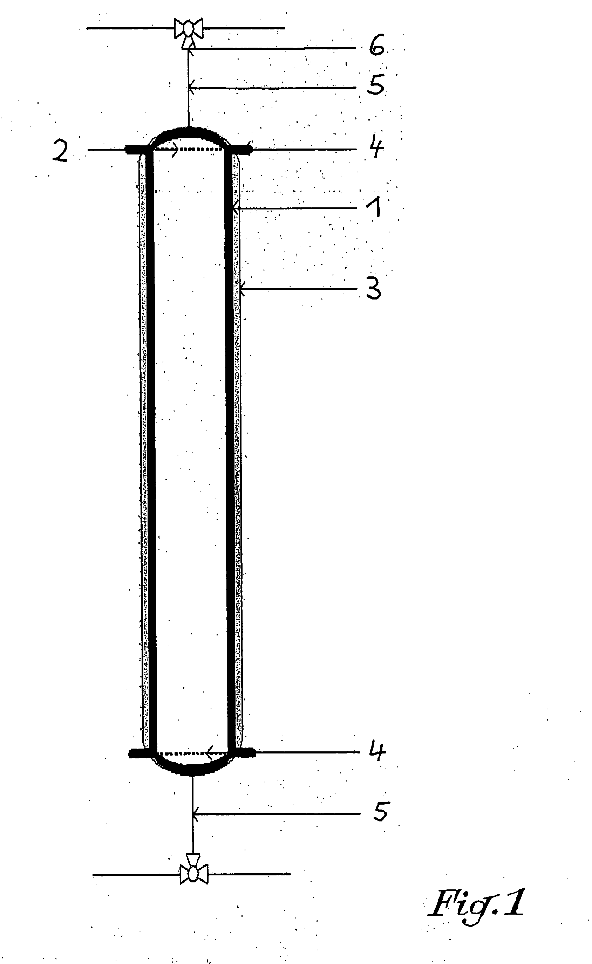

Die Erfindung wird anhand eines Ausführungsbeispiels in Verbindung mit der FIG 1 näher erläutert. Es zeigt FIG 1 einen Extraktionsreaktor zur Hydrolyse von pflanzlichen Rohstoffen, im Ausführungsbeispiel aus Polyvinylchlorid (PVC-C) hart bestehend und als aufrecht stehendes Reaktorrohr 1 mit zwei Siebböden 2 an den beiden Ausgängen ausgebildet. Das Reaktorrohr 1 ist mit einem faserverstärkten Reaktorschutz 3 umgeben. Die die Ausgänge des Reaktorrohrs 1 verschließenden Behälterdeckel 4 sind mit den Siebböden 2 verbunden und lassen sich öffnen und verschließen.

Im Ausführungsbeispiel besteht die Hydrolyseapparatur aus mehreren, hintereinander geschalteten, röhrenförmigen, stehend angeordneten Extraktionsreaktoren. An den Behälterdeckeln 4 sind Rohrleitungen 5 und Ventile 6 für den Ein- und Auslass für die Extraktionslösung angeordnet.

Auf der Grundlage des Verfahrens nach "Bergius-Hägglund" wird die Hydrolyse derart durchgeführt, dass zunächst die Biomasse von oben in das Reaktorrohr 1 eingefüllt und dieser dicht verschlossen wird.

Danach wird die Salzsäure langsam in das Reaktorrohr 1 gepumpt, bis dieser vollständig gefüllt ist.

Anschließend wird die Fließrichtung der Säure geändert, wobei diese nunmehr von oben nach unten durch das Reaktorrohr 1 fließt, bis die im Extraktionsgut enthaltenen Kohlehydrate in der Säure gelöst sind.

Schließlich wird die Restbiomasse im Reaktorrohr 1 mit von oben eingeleiteten Wasser solange gewaschen, bis keine Säure mehr im Reaktor verbleibt.

## Patentansprüche

1. Extraktionsreaktor zur Hydrolyse von pflanzlichen Rohstoffen mit konzentrierten Säuren insbesondere Salzsäure wobei ein aus Kunststoff bestehendes, rohrförmig ausgebildetes, stirnseitig mit Behälterdeckeln (4) und Siebböden (2) sowie Ein- und Auslässen (5) für die Säure bzw. Extraktionsflüssigkeit versehenes Reaktorrohr (1) mit einem faserverstärkten Reaktorschutz (3), dieser bestehend aus einem in einer hohe mechanische Festigkeit aufweisenden Matrix eingeschlossenen Fäsergewebe, ummantelt ist.

2. Extraktionsreaktor nach Anspruch 1, **dadurch gekennzeichnet, dass** das Reaktorrohr (1) aus chlorhaltigen Künststoffen, insbesondere. Polyvinylchlorid (PVC-hart), nachchloriertes Polyvinylchlorid (PVC-C), Perchlortrifluorethylen (PCTFE) oder Chloriertes Polyethylen (PE-C), besteht.

3. Extraktionsreaktor nach Anspruch 1, **dadurch gekennzeichnet, dass** das Reaktorrohr (1) aus polymeren Alkanen, insbesondere Polyethylen (PE), Polypropylen (PP) oder Polybutylen (PB), besteht.

4. Extraktionsreaktor nach Anspruch 1, **dadurch gekennzeichnet, dass** das Reaktorrohr (1) aus fluorhaltigen Polymere, insbesondere Polyvinylidenfluorid (PVDF), Perchlortrifluorethylen (PCTFE) oder perfluorierter Kautschuk (FFPM und FFKM), bestehet.

5. Extraktionsreaktor nach Anspruch 1, **dadurch gekennzeichnet, dass** das Reaktorrohr (1) aus Gummi oder Kautschukarten, insbesondere Butylkautschuk (IIR), Isoprenkautschuk (IR), perfluorierter Kautschuk (FFPM und FFKM) oder Kautschuke mit Schwefel, besteht.

6. Extraktionsreaktor nach Anspruch 1, **dadurch gekennzeichnet, dass** das Reaktorrohr (1) aus Copolymeren, insbesondere Ethylen-Propylen-Dien-Kautschuk (EPDM), Ethylen-Propylen-Copolymer, Ethylen-Tetrafluorethylen (ETFE) oder Perfluor-Ethylen-Propylen-Kunststoff (FEP), besteht.

7. Extraktionsreaktor nach Anspruch 1-6, **dadurch gekennzeichnet, dass** das Reaktorrohr (1) aus Polymermischungen aus den in den Ansprüchen 2-6 **gekennzeichnet**en Polymeren, besteht.

8. Extraktionsreaktor nach Anspruch 1, **dadurch gekennzeichnet, dass** der faserverstärkte Reaktorschutz (3) aus einem Gewebe aus Polymeren, wie Polyvinylchlorid (PVC), Polyethylen (PE), Polypropylen (PP), Polybutylen (PB), Polytetrafluorethylen (PTFE) Polyvinylidenfluorid (PVDF), Polyvinylfluorid (PVF), Ethylen-Propylen-Dien-Kautschuk (EPDM), Ethylen-Propylen-Copolymer, Ethylen-Tetrafluorethylen (ETFE), Perfluor-Ethylen-Propylen-Kunststoff (FEP), Fluor-Polymer-Kunststoffe , Perfluortrifluorethylen (PCTFE), Perfluoriert Kautschuk (FFPM und FFKM), Butylkautschuk (IIR), Isoprenkautschuk (IR), Chloriertes Polyethylen (PE-C), Kautschuk mit Schwefel oder deren Copolymer bzw. Mischungen, dieses eingeschlossen in einer Matrix aus Beton, Polyvinylchlorid (PVC), Polyethylen(PE), Polypropylen (PP), Polybutylen (PB), Polytetrafluorethylen (PTFE), deren Copolymere und Mischungen oder Lignin in reiner oder mit Formaldehyd polymerisierter Form, besteht.

## Claims

1. Extraction reactor for hydrolysing plant-derived raw materials with concentrated acids, in particular hydrochloric acid, where fibre-reinforced reactor protection (3), composed of a fibrous textile enclosed in a high-mechanical-strength matrix sheathes a reactor tube (1) which is composed of plastic and designed in the manner of a tube, and provided at the ends with container covers (4) and with strainers (2), and also with in- and outlets (5) for the acid or extraction liquid.

2. Extraction reactor according to Claim 1, **characterized in that** the reactor tube (1) is composed of chlorinated plastics, in particular polyvinyl chloride (rigid PVC), post-chlorinated polyvinyl chloride (CPVC), perchlorotrifluoroethylene (PCTFE) or chlorinated polyethylene (CPE).

3. Extraction reactor according to Claim 1, **characterized in that** the reactor tube (1) is composed of polymeric alkenes, in particular polyethylene (PE), polypropylene (PP) or polybutylene (PB).

4. Extraction reactor according to Claim 1, **characterized in that** the reactor tube (1) is composed of fluorinated polymers, in particular polyvinylidene fluoride (PVDF), perchlorotrifluoroethylene (PCTFE), or perfluorinated rubber (FFPM and FFKM).

5. Extraction reactor according to Claim 1, **characterized in that** the reactor tube (1) is composed of types of rubber, in particular butyl rubber (IIR), isoprene rubber (IR), perfluorinated rubber (FFPM and FFKM) or rubbers using sulphur.

6. Extraction reactor according to Claim 1, **characterized in that** the reactor tube (1) is composed of copolymers, in particular ethylene-propylene-diene rubber (EPDM), ethylene-propylene copolymer, ethylene-tetrafluoroethylene (ETFE) or perfluorinated ethylene-propylene polymer (FEP).

7. Extraction reactor according to any of Claims 1-6, **characterized in that** the reactor tube (1) is composed of polymer mixtures made of the polymers **characterized in** Claims 2-6.

8. Extraction reactor according to Claim 1, **characterized in that** the fibre-reinforced reactor protection (3) is composed of a textile made of polymers, such as polyvinyl chloride (PVC), polyethylene (PE), polypropylene (PP), polybutylene (PB), polytetrafluoroethylene (PTFE), polyvinylidene fluoride (PVDF), polyvinyl fluoride (PVF), ethylene-propylene-diene rubber (EPDM), ethylene-propylene copolymer, ethylene-tetrafluoroethylene (ETFE), perfluorinated ethylene-propylene polymer (FEP), fluoropolymer plastics, perchlorotrifluoroethylene (PCTFE), perfluorinated rubber (FFPM and FFKM), butyl rubber (IIR), isoprene rubber (IR), chlorinated polyethylene (CPE), rubber using sulphur or a copolymer or mixture of these, enclosed in a matrix made of concrete, polyvinyl chloride (PVC), polyethylene (PE), polypropylene (PP), polybutylene (PB), polytetrafluoroethylene (PTFE), copolymers and mixtures of these, or lignin in pure form or in a form polymerized using formaldehyde.

## Revendications

1. Réacteur d'extraction pour l'hydrolyse de matières premières végétales avec des acides concentrés, notamment de l'acide chlorhydrique, dans lequel un tube de réacteur (1) constitué de plastique, configuré sous forme tubulaire, muni sur le côté frontal de couvercles de contenant (4) et de fonds perforés (2), ainsi que d'entrées et de sorties (5) pour l'acide ou le liquide d'extraction, est enveloppé par une protection de réacteur (3) renforcée par des fibres, celle-ci étant constituée d'un tissu fibreux incorporé dans une matrice présentant une grande résistance mécanique.

2. Réacteur d'extraction selon la revendication 1, **caractérisé en ce que** le tube de réacteur (1) est constitué de plastiques chlorés, notamment de polychlorure de vinyle (PVC dur), de polychlorure de vinyle chloré (PVC-C), de perchlorotrifluoroéthylène (PCTFE) ou de polyéthylène chloré (PE-C).

3. Réacteur d'extraction selon la revendication 1, **caractérisé en ce que** le tube de réacteur (1) est constitué d'alcènes polymères, notamment de polyéthylène (PE), de polypropylène (PP) ou de polybutylène (PB).

4. Réacteur d'extraction selon la revendication 1, **caractérisé en ce que** le tube de réacteur (1) est constitué de polymères fluorés, notamment de polyfluorure de vinylidène (PVDF), de perchlorotrifluoroéthylène (PCTFE) ou de caoutchouc perfluoré (FFPM et FFKM).

5. Réacteur d'extraction selon la revendication 1, **caractérisé en ce que** le tube de réacteur (1) est constitué de caoutchouc ou de types de caoutchouc, notamment de caoutchouc de butyle (IIR), de caoutchouc d'isoprène (IR), de caoutchouc perfluoré (FFPM et FFKM) ou de caoutchoucs contenant du soufre.

6. Réacteur d'extraction selon la revendication 1, **caractérisé en ce que** le tube de réacteur (1) est constitué de copolymères, notamment de caoutchouc éthylène-propylène-diène (EPDM), de copolymère éthylène-propylène, d'éthylène-tétrafluoroéthylène (ETFE) ou de plastique perfluoro-éthylène-propylène (FEP).

7. Réacteur d'extraction selon les revendications 1 à 6, **caractérisé en ce que** le tube de réacteur (1) est constitué de mélanges des polymères identifiés dans les revendications 2 à 6.

8. Réacteur d'extraction selon la revendication 1, **caractérisé en ce que** la protection de réacteur (3) renforcée par des fibres est constituée d'un tissu en polymères, tels que le polychlorure de vinyle (PVC), le polyéthylène (PE), le polypropylène (PP), le polybutylène (PB), le polytétrafluoroéthylène (PTFE), le polyfluorure de vinylidène (PVDF), le polyfluorure de vinyle (PVF), le caoutchouc éthylène-propylène-diène (EPDM), le copolymère éthylène-propylène, l'éthylène-tétrafluoroéthylène (ETFE), le plastique perfluoro-éthylène-propylène (FEP), les plastiques fluoro-polymère, le perchlorotrifluoroéthylène (PCTFE), le caoutchouc perfluoré (FFPM et FFKM), le caoutchouc de butyle (IIR), le caoutchouc d'isoprène (IR), le polyéthylène chloré (PE-C), le caoutchouc contenant du soufre ou leurs copolymères ou mélanges, celui-ci étant incorporé dans une matrice en béton, polychlorure de vinyle (PVC), polyéthylène (PE), polypropylène (PP), polybutylène (PB), polytétrafluoroéthylène (PTFE), leurs copolymères et mélanges ou de la lignine sous forme pure ou polymérisée avec du formaldéhyde.
